# EUROPÄISCHE PATENTANMELDUNG

(11) **EP 0 816 815 A1**
(43) Veröffentlichungstag der Anmeldung: **07.01.1998**
(21) Anmeldenummer: 97110780.0
(22) Anmeldetag: 01.07.1997
(51) Int. Cl.: G01J 3/50, B29C 47/92

(54) **Verfahren und Vorrichtung zur kontinuierlichen Farbmessung von Kunststoff-Formmassen**

(30) Priorität: 03.07.1996 DE 19626785
(71) Anmelder: BASF AKTIENGESELLSCHAFT, 67056 Ludwigshafen (DE)
(72) Erfinder: Anderlik, Rainer, Dr., 69121 Heidelberg (DE); Ettmüller, Jürgen, 67454 Hassloch (DE); Rädle, Matthias, Dr., 67273 Weisenheim (DE); Schmaus, Paulus, 67071 Ludwigshafen (DE); Mödersheim, Norbert, 67227 Frankenthal (DE)
(74) Vertreter: Isenbruck, Günter, Dr.

(57) **Zusammenfassung**

Verfahren zur kontinuierlichen Farbmessung von Kunststoff-Formmassen, bei dem Licht über Sender-Lichtleiter (7) und einen Sensorkopf (6) in die Schmelze der Formmasse eingeleitet und das dort reflektierte Licht über Empfänger-Lichtleiter (9) zu einem Spektrometer (10) oder Mehrbereichsphotometer geführt wird, dadurch gekennzeichnet, daß einander zugeordnete Sender- und Empfänger-Lichtleiter jeweils gleichen Abstand voneinander aufweisen.

## Beschreibung

Die Erfindung betrifft ein Verfahren und eine Vorrichtung zur kontinuierlichen Farbmessung von Kunststoff-Formmassen, bei dem Licht über Sender-Lichtleiter und einen Sensorkopf in die Schmelze der Formmasse eingeleitet und das dort reflektierte Licht über Empfänger-Lichtleiter zu einem Spektrometer oder Mehrbereichsphotometer geführt wird. Bei derartigen Formmassen werden Farbmittel wie Pigmente oder Farbstoffkonzentrate und ggf. weitere Additive wie Dispergierhilfsmittel dem ungefärbten Kunststoff-Mengenstrom zugemischt und in einem geeigneten Aufbereitungsaggregat, beispielsweise einem gleichsinnig drehenden, dichtkämmenden Zweischnecken-Extruder homogenisiert. In einem darauffolgenden Verfahrensschritt wird die eingefärbte Kunststoff-Formmasse granuliert.

Bei bekannten Verfahren wird aus dem erzeugten Produktstrom eine Granulatprobe entnommen, die in einem nachgeschalteten Schritt zu einem Formkörper verarbeitet wird, an dem die eigentliche Farbmessung mit Hilfe von spektroskopischen Methoden erfolgt. Durch diese Vorgehensweise entsteht ein erheblicher zeitlicher Verzug zwischen der Herstellung des farbigen Granulats und der qualitätssichernden Farbüberprüfung am Formteil. Beim Auftreten von Farbabweichungen werden erhebliche Mengen von Fehlchargen produziert, bevor die Farbabweichung erkannt und geeignete Gegenmaßnahmen getroffen werden können. Wird die Produktion erst nach Überprüfung eines Formteil-Musters freigegeben, so ergeben sich Maschinenstillstandszeiten, die unwirtschaftlich sind.

Aus diesem Grunde sind auch bereits In-line-Meßmethoden entwickelt worden, die den Farbton ohne Zeitverzug anzeigen. So ist in der EP 0 407 927 bereits ein Verfahren zur kontinuierlichen Messung des Farbtons einer farbigen Kunststoff-Formmasse beschrieben, bei dem Kunststoffgranulate beim Passieren eines Meßfensters hinsichtlich ihres Farbtons charakterisiert werden. Nachteilig an diesem Meßverfahren sind die damit verbundenen Reflexe. Außerdem besteht die Möglichkeit, daß das Meßergebnis durch Feuchte, die vom Granulierprozeß stammt, beeinflußt wird. In der US 5,369,483 wird weiterhin ein Verfahren zur Messung des Farbtons einer Kunststoff-Formmasse beschrieben, in dem mittels eines Glasfaserbündels das Streulicht einer Kunststoffschmelze analysiert wird. Nachteilig an diesem Verfahren ist die geringe Langzeitstabilität kommerzieller Faserbündel. Weiterhin ist die Geometrie der produktberührenden Teile vom Prinzip her ungünstig, da die in der Regel zähen Schmelzen nur zu geringem Produktaustausch an der Meßfläche führen. Weiterhin ist ungünstig, daß die beleuchtete Fläche im Sichtbereich des Detektors liegt und damit Kleinste, nicht zu vermeidende Verunreinigungen zu erheblichen Meßfehlern führen können. Aus der EP 0 072 899 ist schließlich eine photometrische Meßeirrichtung bekannt, bei der eine Rückstreutechnik verwendet wird. Die hier erzielten Ergebnisse sind jedoch im Hinblick auf die mit der vorliegenden Erfindung angestrebten Verwendungszwecke nicht optimal.

Der Erfindung liegt die Aufgabe zugrunde, ein Verfahren und eine Vorrichtung zu schaffen, mit denen außerordentlich schnell und sicher Änderungen einer Farbe einer Kunststoffschmelze festgestellt und ohne jeden Zeitverzug deren Korrektur durchgeführt werden kann.

Diese Aufgabe wird erfindungsgemäß dadurch gelöst, daß einander zugeordnete Sender- und Empfänger-Lichtleiter jeweils gleichen Abstand voneinander aufweisen. Dies kann dadurch erreicht werden, daß die Sender- und Empfänger-Lichtleiter je aus Glasfasern bestehen, die von einer Schicht aus Quarz und diese wiederum von einer Schicht aus Kunststoff umhüllt sind. Die Umhüllung der Quarzschicht kann in besonders vorteilhafter Weise auch aus einer Metallschicht, vorzugsweise aus Gold, bestehen. Diese Metallschicht ist vorzugsweise aufgedampft. Es ist besonders vorteilhaft, wenn die Durchmesser der Glasfasern gleich sind. Außerdem ist es besonders vorteilhaft, wenn die Dicke der Umhüllung jeder Glasfaser gleich ist. Es wurde überraschend gefunden, daß ein solcher Aufbau eines Glasfaserkabels, bei dem die gleichen Abstände zugeordneter Sender- und Empfänger-Lichtleiter vorhanden sind, die durch die gleiche Schichtdicke der Umhüllung entsteht, außerordentlich empfindliche Messungen zuläßt. Dies beruht im wesentlichen darauf, daß die ausgesandten Lichtstrahlen nicht direkt, sondern erst nach Mehrfachreflexion in der Schmelze in den Empfänger-Lichtleiter gelangen. Hierdurch wird der Reflexionseffekt vervielfacht. Die Glasfasern können einen Durchmesser von 50 µm bis 800 µm, vorzugsweise 150 µm bis 250 µm, aufweisen. Der Abstand der Glasfasern liegt vorteilhafterweise zwischen 40 µm und 1400 µm, vorzugsweise zwischen 50 µm und 150 µm.

Von besonderem Vorteil ist es, wenn das durch den Sender-Lichtleiter geleitete Licht Wellenlängen aus einem breiten Spektrum aufweist. Dabei kann Licht im Bereich der Wellenlängen von 200 µm bis 2400 µm in den Sender-Lichtleiter eingeleitet werden. Weiterhin ist es von besonderem Vorteil für das erfindungsgemäße Verfahren, wenn die Intensität aller Wellenlängen des reflektierten Lichts gleichzeitig gemessen wird. Die Meßzeit kann dabei im Bereich < 4 msec, vorzugsweise in einem Bereich von etwa 0,5 msec, liegen.

Für die Anwendung des erfindungsgemäßen Verfahrens ist es von besonderem Vorteil, wenn der Sensorkopf, in den die Glasfasern münden, in die Schmelze hineinragt. Dabei sollte dieser Sensorkopf einen geringen Strömungswiderstand aufweisen, was sich durch dessen kegelförmige Ausbildung realisieren läßt. Insbesondere aus Gründen der Stabilität ist es besonders vorteilhaft, Glasfasern über der auf diesen angeordneten Quarzschicht mit einer metallischen, vorzugsweise aus Gold bestehenden Schicht zu versehen. Dies kann durch Aufdampfen erfolgen. Diese metallische Schicht läßt sich dann metallisch, vorzugsweise durch Einlöten, mit dem Sensorkopf verbinden, der zumindest innen metallisch ausgebildet ist.

Das erfindungsgemäße Verfahren läßt sich besonders vorteilhaft für Qualitätskontrolle und Qualitätssicherung von Kunststoffeinfärbungsprozessen, insbesondere zur Rezepturoptimierung von Pigmentpräparationen verwenden.

Gemäß einer vorteilhaften Ausbildung der Erfindung ist der Sensorkopf in einer mit einem Außengewinde versehenen Hülse gelagert, die in ein in einem Behälter für die Kunststoff-Formmasse vorgesehenen Gewinde einschraubbar ist. Dieses Gewinde kann auch für das Einschrauben anderer Meßvorrichtungen dienen.

Weitere Einzelheiten und Vorteile der Erfindung können den in der Zeichnung dargestellten Ausführungsbeispielen entnommen werden. Es zeigen
- Figur 1: das allgemeine Schema einer Anordnung, mit der das erfindungsgemäße Verfahren durchgeführt werden kann;
- Figur 2: einen Querschnitt durch eine Lichtleiter-Anordnung gemäß der Erfindung;
- Figur 3: eine Figur 2 entsprechende, abgeänderte Lichtleiter-Anordnung;
- Figur 4: einen Längsschnitt durch die Lichtleiter-Anordnung nach Figur 2; und
- Figur 5: die bei Versuchen mit einer Lichtleiter-Anordnung nach den Figuren 2 und 4 erzielten Meßergebnisse.

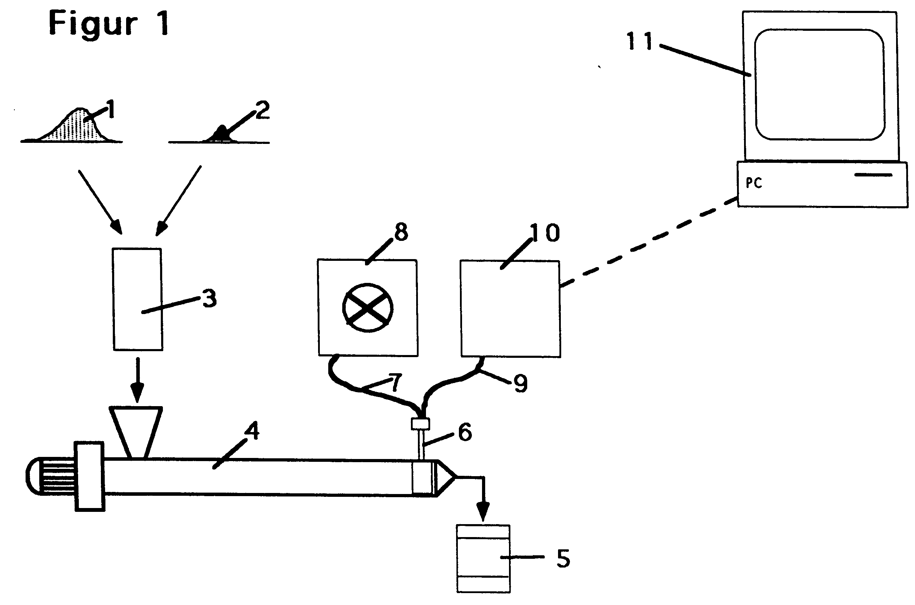

Wie Fig. 1 zu entnehmen ist, werden ungefärbtes Kunststoffgranulat 1 sowie stark mit Farbstoff versehenes Granulat (Master-Batch) 2 einem Mischer 3 zugeführt und gelangen von diesem in einen gleichsinnig drehenden, dichtkämmenden Zweischnecken-Extruder 4. Dort wird das Granulat homogenisiert, dabei über die Schmelztemperatur erhitzt. Das entstehende strangförmige Produkt wird anschließend einem Auffangbehälter 5 zugeführt. In den Extruder ragt der in ein Gewinde im Extruder eingeschraubte Sensorkopf 6, in dem die Sender- und Empfänger-Lichtleiter 7, 9 enden. Der Sender-Lichtleiter 7 ist mit der Lichtquelle 8, und der Empfänger-Lichtleiter 9 ist mit dem Spektrometer 10 verbunden. Die vom Spektrometer 10 empfangenen Impulse werden einer Auswertungseinheit 11 zugeführt.

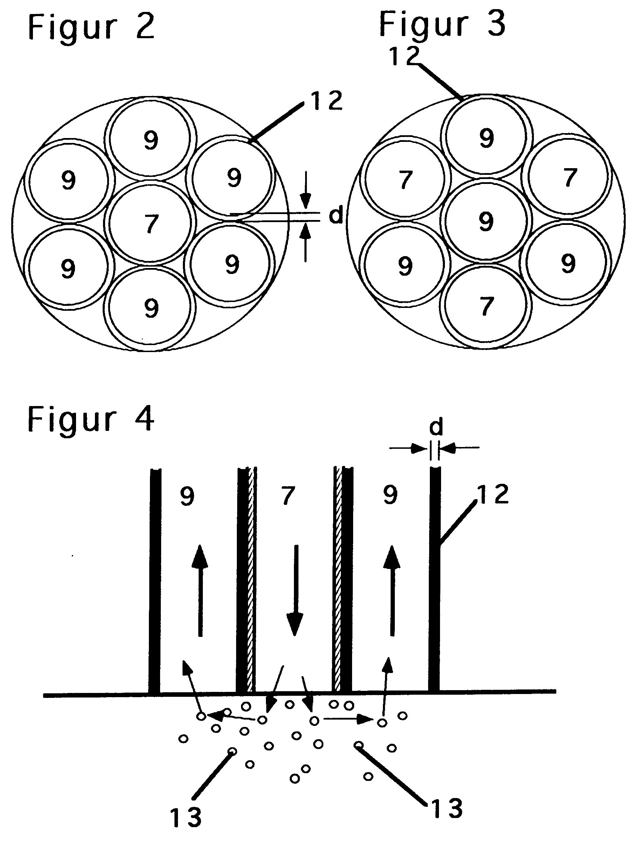

Bei dem in Fig. 2 im Querschnitt dargestellten Lichtleiter-Element ist ein einziger Sender-Lichtleiter 7 vorgesehen, der zentral angeordnet ist. Um ihn sind sechs Empfänger-Lichtleiter 9 angeordnet, die mit ihren Umhüllungen 12 aneinander liegen. Der Außendurchmesser des gesamten Lichtleiter-Elements, das auch als Lichtleiter-Kabel bezeichnet werden kann, beträgt 960 µm. Dabei haben die Glasfasern 7 und 9 je einen Durchmesser von 250 µm. Ihre Umhüllung hat je eine Dicke d von 35 µm. Diese Wandstärke d der Umhüllung setzt sich zusammen aus einer inneren Quarzumhüllung mit einer Dicke von 20 µm und einer auf dieser angebrachten Kunststoffschicht, beispielsweise Polyimid, mit einer Dicke von 15 µm. Anstelle des Polyimids kann in besonders vorteilhafter Weise auch eine aufgedampfte Metallschicht, insbesondere aus Gold, verwendet werden. Dies ermöglicht die metallische Verbindung der Lichtleiter 7 und 9 mit dem Sensorkopf 6, vorzugsweise durch Einlöten. Hierdurch wird eine erheblich vergrößerte Stabilität erreicht.

Fig. 3 zeigt eine abgewandelte Ausführungsform des Aufbaus des Lichtleiter-Elements, bei der die äußeren Lichtleiter abwechselnd Sender-Lichtleiter 7 und Empfänger-Lichtleiter 9 sind.

Fig. 4 zeigt im Längsschnitt, wie das durch den Sender-Lichtleiter 7 zugeführte Licht an den Partikeln 13 mehrfach gestreut wird und danach durch den Empfänger-Lichtleiter 9 zum Spektrometer 10 geleitet wird.

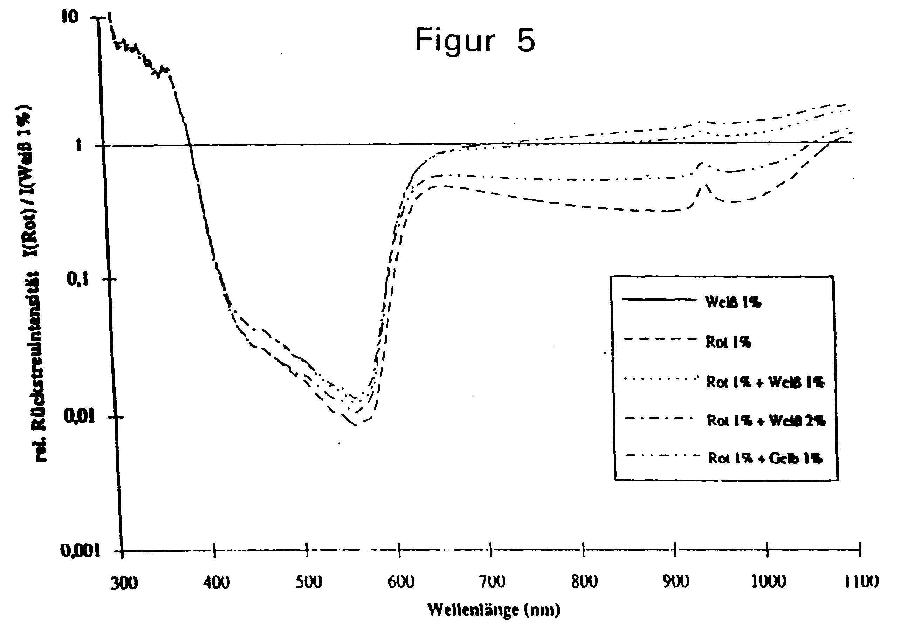

Die Ergebnisse von Versuchen, die nach dem erfindungsgemäßen Verfahren mit der vorbeschriebenen Anordnung durchgeführt wurden, sind Fig. 5 zu entnehmen. Die dort dargestellten Daten wurden in einer Kunststoffschmelze aufgenommen. Dabei wurde zunächst in klare Schmelze 1 Gew.-% weißes Pigment eindosiert und über den Extruder gefahren. Die entsprechende Rückstreuung wurde als Standard definiert und auf 1 = 100% gesetzt. Anschließend wurde rotes Pigment anstelle des weißen zudosiert und spektral die Quasirückstreuung aufgenommen. Es ist ersichtlich, daß sich drastische Signaländerungen, je nach Wellenlänge, bis zu Faktor 100 ergeben. Nachfolgend wurden unterschiedliche Dosierungen an Pigmentpulvern zugefahren, die alle zeigen, daß diese Farbkonzentrations-Variationen drastische Signaleffekte bewirken. Zusammen mit der möglichen Meßgenauigkeit von unter 1% rel. ergab sich eine sehr hohe Meß- und damit Dosiergenauigkeit für Schmelzeeinfärbungen.

Die Messungen wurden von 300 bis 1100 nm aufgenommen. Sie illustrieren, daß neben Messung im sichtbaren Bereich auch der NIR und der UV-Bereich erschlossen wird.

## Patentansprüche

1. Verfahren zur kontinuierlichen Farbmessung von Kunststoff-Formmassen, bei dem Licht über Sender-Lichtleiter und einen Sensorkopf in die Schmelze der Formmasse eingeleitet und das dort reflektierte Licht über Empfänger-Lichtleiter zu einem Spektrometer oder Mehrbereichsphotometer geführt wird, **dadurch gekennzeichnet, daß** einander zugeordnete Sender- und Empfänger-Lichtleiter jeweils gleichen Abstand voneinander aufweisen.

2. Verfahren nach Anspruch 1, dadurch gekennzeichnet, daß Sender- und Empfänger-Lichtleiter je aus Glasfasern bestehen, die von einer Schicht aus Quarz und diese von einer Schicht aus Kunststoff umhüllt sind.

3. Verfahren nach Anspruch 1, dadurch gekennzeichnet, daß Sender- und Empfänger-Lichtleiter je aus Glasfasern bestehen, die von einer Schicht aus Quarz und diese von einer Schicht aus Metall, insbesondere Gold umhüllt sind.

4. Verfahren nach Anspruch 3, dadurch gekennzeichnet, daß das Metall, insbesondere Gold aufgedampft ist.

5. Verfahren nach einem der Ansprüche 2, 3 oder 4, dadurch gekennzeichnet, daß der Durchmesser der Glasfasern gleich ist.

6. Verfahren nach einem der Ansprüche 2 bis 5, dadurch gekennzeichnet, daß die Dicke der Umhüllung der Glasfasern gleich ist.

7. Verfahren nach einem der vorhergehenden Ansprüche, dadurch gekennzeichnet, daß die Glasfasern einen Durchmesser von 50 - 800 µm, vorzugsweise von 150 - 250 µm, aufweisen.

8. Verfahren nach Anspruch 7, dadurch gekennzeichnet, daß der Abstand der Glasfasern 20 - 1400 µm, vorzugsweise 50 - 150 µm, beträgt.

9. Verfahren nach einem der Ansprüche 1 bis 8, dadurch gekennzeichnet, daß das durch den Sender-Lichtleiter geleitete Licht Wellenlängen aus einem breiten Spektrum aufweist.

10. Verfahren nach Anspruch 9, dadurch gekennzeichnet, daß Licht im Bereich der Wellenlängen von 20 nm - 2400 nm in die Sender-Lichtleiter eingeleitet wird.

11. Verfahren nach einem der vorhergehenden Ansprüche, dadurch gekennzeichnet, daß die Intensität aller Wellenlängen des reflektierten Lichts gleichzeitig gemessen wird.

12. Verfahren nach einem der vorhergehenden Ansprüche, dadurch gekennzeichnet, daß die Meßzeit im Bereich Kleiner als 100 msec, vorzugsweise im Bereich von etwa 5 msec, liegt.

13. Verfahren nach einem der vorhergehenden Ansprüche, dadurch gekennzeichnet, daß der an die Glasfasern anschließende Sensorkopf in die Schmelze hineinragt.

14. Verfahren nach Anspruch 13, dadurch gekennzeichnet, daß der Sensorkopf einen geringen Strömungswiderstand aufweist.

15. Verfahren nach Anspruch 13 oder 14, dadurch gekennzeichnet, daß der Sensorkopf kegelförmig ausgebildet ist.

16. Verfahren nach einem der Ansprüche 3 bis 15, dadurch gekennzeichnet, daß die Lichtleiter metallisch mit dem Sensorkopf verbunden sind.

17. Verfahren nach Anspruch 16, dadurch gekennzeichnet, daß die Lichtleiter in den Sensorkopf eingelötet sind.

18. Verwendung des Verfahrens nach einem der vorhergehenden Ansprüche zur Qualitätskontrolle und Qualitätssicherung von Kunststoffeinfärbeprozessen.

19. Verwendung des Verfahrens nach einem der Ansprüche 1 bis 17 zur Rezepturoptimierung von Pigmentpräparationen.

20. Vorrichtung zu kontinuierlichen Farbmessung von Kunststoff-Formmassen, bei der Licht über Sender-Lichtleiter und einen Sensorkopf in die Schmelze der Formmasse eingeleitet und das dort reflektierte Licht über den Sensorkopf und Empfänger-Lichtleiter zu einem Spektrometer oder Mehrbereichsphotometer geführt wird, dadurch gekennzeichnet, daß einander zugeordnete Sender- und Empfänger-Lichtleiter im Sensorkopf jeweils gleichen Abstand voneinander aufweisen.

21. Vorrichtung nach Anspruch 20, dadurch gekennzeichnet, daß die Sender und Empfänger-Lichtleiter je aus mindestens einer Glasfaser bestehen, die von einer Schicht aus Quarz und diese von einer Schicht aus Kunststoff umhüllt sind.

22. Vorrichtung nach Anspruch 20, dadurch gekennzeichnet, daß die Sender und Empfänger-Lichtleiter je aus mindestens einer Glasfaser bestehen, die von einer Schicht aus Quarz und diese von einer Schicht aus Metall, insbesondere Gold umhüllt sind.

23. Vorrichtung nach Anspruch 22, dadurch gekennzeichnet, daß das Metall, insbesondere Gold aufgedampft ist.

24. Vorrichtung nach einem der Ansprüche 21 bis 23, dadurch gekennzeichnet, daß der Durchmesser der Glasfasern gleich ist.

25. Vorrichtung nach einem der Ansprüche 21 bis 24, dadurch gekennzeichnet, daß die Dicke der Umhüllung der Glasfasern gleich ist.

26. Vorrichtung nach einem der Ansprüche 21 bis 25, dadurch gekennzeichnet, daß die Glasfasern einen Durchmesser von 50 - 800 µm, vorzugsweise von 150 - 250 µm, aufweisen.

27. Vorrichtung nach Anspruch 26, dadurch gekennzeichnet, daß der Abstand der Glasfasern 20 - 1400 µm, vorzugsweise 50 - 150 µm, beträgt.

28. Vorrichtung nach einem der Ansprüche 20 bis 27, dadurch gekennzeichnet, daß der an die Glasfasern anschließende Sensorkopf in ein die Schmelze führendes Gerät hineinragt.

29. Vorrichtung nach Anspruch 28, dadurch gekennzeichnet, daß der Sensorkopf kegelförmig ausgebildet ist.

30. Vorrichtung nach einem der Ansprüche 28 oder 29, dadurch gekennzeichnet, daß der Sensorkopf ein Außengewinde aufweist, das in ein Gewinde in das die Schmelze führende Gerät einschraubbar ist.

31. Vorrichtung nach einem der Ansprüche 20 bis 30, dadurch gekennzeichnet, daß die Lichtleiter metallisch mit dem Sensorkopf verbunden sind.

32. Vorrichtung nach Anspruch 31, dadurch gekennzeichnet, daß die Lichtleiter mit dem Sensorkopf durch Einlöten verbunden sind.
